# EUROPEAN PATENT APPLICATION

(11) **EP 0 724 350 A2**
(43) Date of publication of application: **31.07.1996**
(21) Application number: 96300292.8
(22) Date of filing: 16.01.1996
(51) Int. Cl.: H04M 3/42, H04M 3/54, H04M 11/02

(54) **System and method for establishing communications over a network**

(30) Priority: 27.01.1995 US 379430
(71) Applicant: AT&T Corp., New York, NY 10013-2412 (US)
(72) Inventor: Foladare, Mark J., Kendall Park, NJ 08824 (US); Friedes, Albert, East Brunswick, NJ 08816 (US); Goldman, Shelley B., East Brunswick, NJ 08816 (US); Weber, Roy P., Bridgewater, NJ 08807 (US)
(74) Representative: Buckley, Christopher Simon Thirsk

(57) **Abstract**

In a communication system capable of establishing communication with a mobile party having a Personal Telephone Number the mobile party uses a two-way pager (10) to transmit a forwarding number to a paging service (28). The paging service relays the forwarding number to a Customer Routing Point (34) where the number is stored. Whenever a caller (12) initiates a call to the mobile party by dialing the mobile party's Personal Telephone Number, the Customer Routing Point (34) is notified. The Customer Routing Point then cross-references the Personal Telephone Number with the forwarding number and forwards the call to a terminating telephone (32) associated with the forwarding number. In one possible embodiment an adjunct is used in conjunction with the Customer Routing Point to offer call forwarding service on both a call by call basis and a registration basis.

## Description

### Cross-Reference to Related Application

This application is related to commonly assigned pending U.S. patent application entitled SYSTEM AND METHOD FOR ESTABLISHING COMMUNICATIONS WITH A MOBILE PARTY (M.J. Foladare 2-13-13-17), filed on the same date hereof and hereby incorporated by reference.

### Technical Field

This invention relates to communications systems, and more particularly to establishing communications with a mobile party using paging technology.

### Background of the Invention

Establishing communications with a called party becomes a problem when that party is mobile. In general, persons wishing to contact a particular party initiate a call to a specific telephone associated with that party, such as the party's home telephone. A disadvantage of this method of communication is that parties are not always in close proximity to their home telephone, or for that matter, in close proximity to any telephone. This presents a problem to persons who need to contact the mobile party immediately, and regardless of that party's location.

Several technologies have developed in an effort to solve the problem of establishing communication with a mobile party. These include call forwarding, paging, and cellular systems. However, each of these technologies has drawbacks which prevent seamless and ubiquitous communication.

Call forwarding is a well-known technique whereby an individual who plans to be away from an associated telephone can redirect calls to an alternate telephone. For example, an office worker planning to go on vacation could redirect calls to an office mate's telephone. Such a system, although desirable, is inflexible. It requires that the forwarding party access a telephone to activate and deactivate the call forwarding, and to change the forwarding number. This inflexibility is particularly harsh on those parties that require frequent changes to their forwarding number, such as a travelling salesman who is on the road and would like to receive calls from potential buyers.

Moreover, present call forwarding schemes make inefficient use of network resources. Calls must be sent to the forwarding party's end office before they are redirected. Thus, for example, when a party forwards calls from the party's home telephone in California to a relative's telephone in New Jersey, calls from New York to the party's home telephone will be routed to California before being forwarded to New York. Such a process unnecessarily ties up network resources from New York to California to complete a call from New York to New Jersey.

In a paging system, a mobile individual carries a portable pager. Typically, the pager is assigned a telephone number and is capable of receiving a predetermined radio signal. When a caller dials the pager's number the predetermined radio signal is broadcast and the pager responds to the signal by activating an audible and/or visual alarm. The alarm serves to alert the mobile individual that an attempt to contact her has been made. Often, the caller's telephone number will be included in the radio signal so that the pager can record the caller's number and the called party can initiate a return call at some later time. One of the drawbacks of past paging systems is that they do not usually support two-way communication. Thus, in a typical paging scenario, the called party must relocate and initiate a return call to establish full two-way communication with the calling party. Such relocation may be inconvenient and untimely resulting in "telephone tag" - situations in which two individuals periodically try to contact one another and fail because the other person is unavailable.

Another drawback of past paging systems is the delay associated with the paging queue. In general, a paging service can only transmit one page at a time. However, a service usually receives many paging requests at once. Consequently, a queue builds up at the service's broadcast facility and a delay in paging throughput times results. This problem is compounded in paging services that offer national coverage to their subscribers. In such services a subscriber's pages are broadcast from several facilities, and therefore a delay in throughput times results at each facility.

Cellular systems offer an answer to the relocation problems present in call forwarding systems and paging systems but introduce a host of new problems. A typical cellular phone is a wireless two-way voice communication device that can be carried on an individual's person. Typically, each cellular phone user subscribes to service with a carrier in a particular geographic region served by that carrier. Calls to the subscriber, when the subscriber is in the home region, are easily completed since such calls are routed through a Mobile Telephone Switching Office (MTSO) serving the home region. However, when a subscriber is located in a different region, the subscriber is designated a "roamer", and call completion becomes more difficult because it is not known, a priori, through which MTSO to route the call.

The roamer problem may be overcome by having the roaming subscriber notify the "home MTSO" that she will be located in another region. This allows the necessary information to be transmitted from the "home MTSO" to the "host MTSO" so that the "host MTSO" can route the subscriber's calls. This "cellular call forwarding", however, introduces problems similar to those associated with traditional call forwarding. Moreover, all cellular communications - including those within the home region - suffer from a sensitivity to noise, precluding guaranteed high quality communications.

Given the problems associated with the prior call forwarding, paging, and cellular systems, there is a need to provide a system that will assure ubiquitous high quality communications with mobile parties.

The invention disclosed in the M.J. Foladare 2-13-13-17 application, cited hereinabove, addresses the foregoing disadvantages in prior systems used to communicate with mobile individuals. The Foladare 2-13-13-17 invention disclosed a system for communicating with a mobile individual wherein the mobile individual uses a two-way pager to transmit a forwarding number on a call by call basis. In this manner, the invention overcame the disadvantages of the prior systems. However, the Foladare 2-13-13-17 invention possesses a characteristic that can be improved upon, namely, the lengthy call setup time that results from having to wait for the mobile party to transmit the forwarding number.

### Summary of the Invention

The present invention employs a two-way paging technique to overcome the disadvantages present in the prior systems used to communicate with mobile individuals, while minimizing the time required to establish such communication.

A mobile person who wishes to take advantage of the present invention is equipped with a two-way pager and is assigned a Personal Telephone Number (PTN). The mobile person uses the pager to transmit a forwarding telephone number to a paging service. The paging service relays the forwarding number to a Customer Routing Point (CRP) where the number is stored. Thereafter, whenever a call is placed to the mobile person's PTN, the terminating number is retrieved from the CRP and is used to forward the call to a terminating telephone.

In a preferred embodiment of the invention, a call to a mobile person would be completed according to the following "registration" procedure. The mobile person is equipped with a two-way pager having a keypad which the person uses to "key in" a forwarding telephone number, the forwarding number being associated with a terminating telephone to which the person's calls are to be forwarded. The person then initiates transmission of an update signal from the two-way pager to a paging service transceiver. Included within the update signal is the forwarding number.

After receiving the update signal, the paging service transceiver relays the signal to a satellite ground station, either directly, or through a satellite. The ground station, in turn, relays the signal to the CRP where the forwarding number is extracted from the signal and stored for retrieval at a later time. At this point the system is configured to forward the mobile person's incoming calls.

A caller initiates an incoming call from a caller telephone to the mobile person by dialing the mobile person's PTN. The call is routed to a network access switch which is coupled to a Network Control Point (NCP). The NCP uses the dialed PTN to access the CRP and retrieve the mobile person's forwarding number. The NCP then passes the forwarding number to the network access switch which uses the number to reroute the call to a terminating telephone. The mobile person may then "pick up" the call at the terminating telephone.

The present invention offers several advantages over the prior systems. First, the mobile party can change the forwarding number using the two-way pager, eliminating the need to access a telephone each time the party wishes to change the forwarding number. Second, the mobile party may change the forwarding number on a call by call basis, determining the identification of a caller from the caller identification number and forwarding the caller accordingly. Third, unlike traditional paging systems, the mobile party does not need to relocate and initiate a return call. Thus, the calling party is not burdened with waiting for a return call and "telephone tag" situations are avoided. Fourth, the invention allows a mobile party to redirect calls to a cellular unit, thereby, providing a way for the mobile party to take advantage of cellular service when it is available while at the same time providing alternate communication when it is not available.

Moreover, the present invention allows call forwarding to be implemented at a point that is in close proximity to the originating telephone (typically near the first network switch). Thereby, allowing more efficient routing of forwarded calls and avoiding unnecessary use of network resources.

The present invention also offers advantages over the invention of commonly assigned pending patent application entitled SYSTEM AND METHOD FOR ESTABLISHING COMMUNICATIONS WITH A MOBILE PARTY (M.J. Foladare 2-13-13-17), filed on the same date hereof, the disclosure of which is hereby incorporated by reference. In that invention the mobile party used a two-way pager to respond to calls on a "call by call" basis. By contrast, the present invention allows the mobile party to "register" a forwarding number so that the party may still change the forwarding number wherever and whenever the party wants, but does not need respond on a call by call basis. Furthermore, registration allows for shorter call setup times since the system does not need to wait for the subscriber to transmit a response before implementing a forwarding procedure. Moreover, the Foladare 2-13-13-17 invention required the bridging or merging of two separate calls in order to complete one call, a technique which places an added burden on system hardware and also contributes to call setup times. The present invention reduces the hardware burden and the contribution to call setup times by forwarding calls through rerouting rather than bridging or merging. In addition, the present invention may be combined with the Foladare 2-13-13-17 invention in an embodiment that realizes the advantages of both using the two-way pager to forward calls on a "registration" basis and using the two-way pager to forward calls on a "call by call" basis.

### Brief Description of the Drawings

FIG. 1 is a block-schematic diagram of a communications system in accordance with the present invention.

FIG. 2 is a block-schematic diagram of a preferred embodiment of a communication system incorporating the present invention.

FIG. 3 shows a pager appropriate for use in accordance with the present invention.

FIGs 4A and 4B make up a flow chart depicting the procedure followed to update a subscriber's forwarding number.

FIG. 5 is a flow chart depicting the procedure followed to complete a call according to the present invention.

FIG. 6 is a block-schematic diagram of a further embodiment of a communication system in accordance with the present invention.

FIG. 7 is a block-schematic diagram of a communication system that may be used to implement call by call mode forwarding.

FIG. 8 is a block-schematic diagram of an existing telephone network incorporating the elements of FIG. 7.

FIGS. 9A and 9B make up a flowchart depicting the steps taken in forwarding calls on a call by call basis.

### Detailed Description

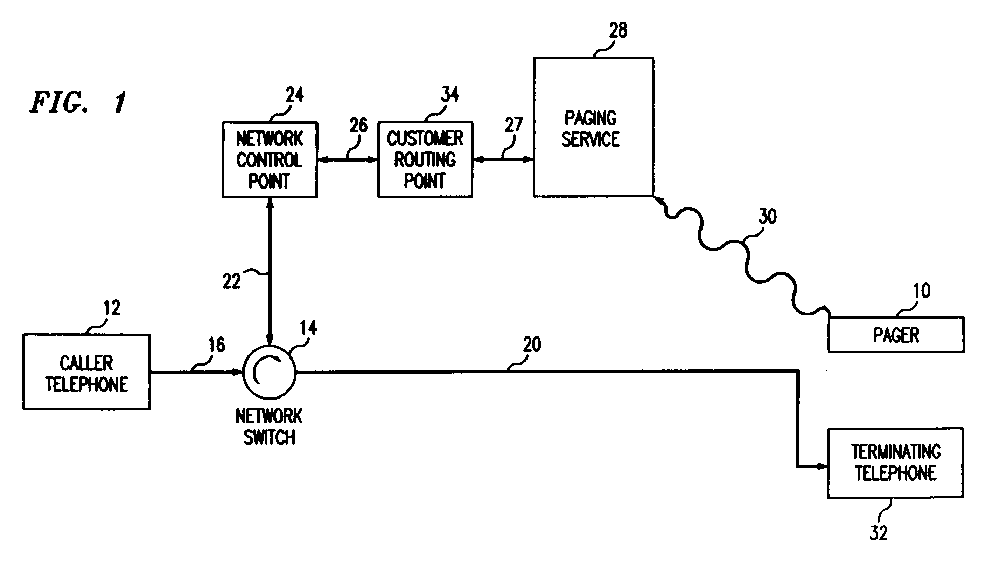

Referring to FIG. 1, there is shown a block diagram of a communication system incorporating the present invention. In accordance with the invention, a caller will be able to complete a call to a mobile party who is equipped with a two-way pager **10**. The caller initiates the call via a caller telephone **12**. At this point it should be noted that the caller telephone, like all other telephones hereinafter discussed, is used merely as an illustration, and that the invention may be implemented using a variety of communication devices, including, but not limited to telephones, computers, and facsimile machines.

In any event, caller telephone **12** is coupled to a network access switch **14** by a first communication coupling **16**. First communication coupling **16**, and all communication couplings hereinafter described, may take the form of a telephone line, twisted pair line, coaxial cable, fiber optic line, wireless link, or any other type of communication coupling.

Through first communication coupling **16**, network access switch **14**, and a second communication coupling **22** caller telephone **12** is coupled to a Network Control Point (NCP) **24**. The NCP is coupled to a Customer Routing Point (CRP) **34** via a third communication coupling **26**, and the CRP is, in turn, coupled to a paging service **28** via a fourth communication coupling **27**. The mobile party uses the pager to transmit an update signal, represented by wireless link **30**, to the paging service. The update signal includes a forwarding telephone number that is associated with a terminating telephone **32**, and may include an identification signal containing information sufficient for identifying the transmitting pager. Upon receiving the update signal from the pager, the paging service relays the signal to the CRP where the forwarding number is extracted from the signal and stored. The forwarding number supplied by the mobile party is cross-referenced with the party's PTN so that whenever the party's PTN is dialed the terminating number for that party may be retrieved from the CRP.

When a caller initiates a call by dialing the mobile party's PTN, the call is coupled to NCP **24** via the combination of first communication coupling **16**, network access switch **14**, and second communication coupling **22**. The NCP then queries the CRP through third communication coupling **26**. Based on the dialed PTN, the CRP retrieves the mobile party's forwarding number and passes it back to the NCP via the third communication coupling. The NCP, in turn, passes the forwarding number to the network access switch **14** which uses the number to reroute the call to terminating telephone **32**. The network access switch **14** reroutes the call to the terminating telephone via a fourth communication coupling **20**. At this point, the call may be "picked up" by the mobile party at the terminating telephone.

It should be noted that the functions of CRP **34** may be incorporated into NCP **24** or paging service **28**, in which case the present invention may be implemented without a separate CRP element.

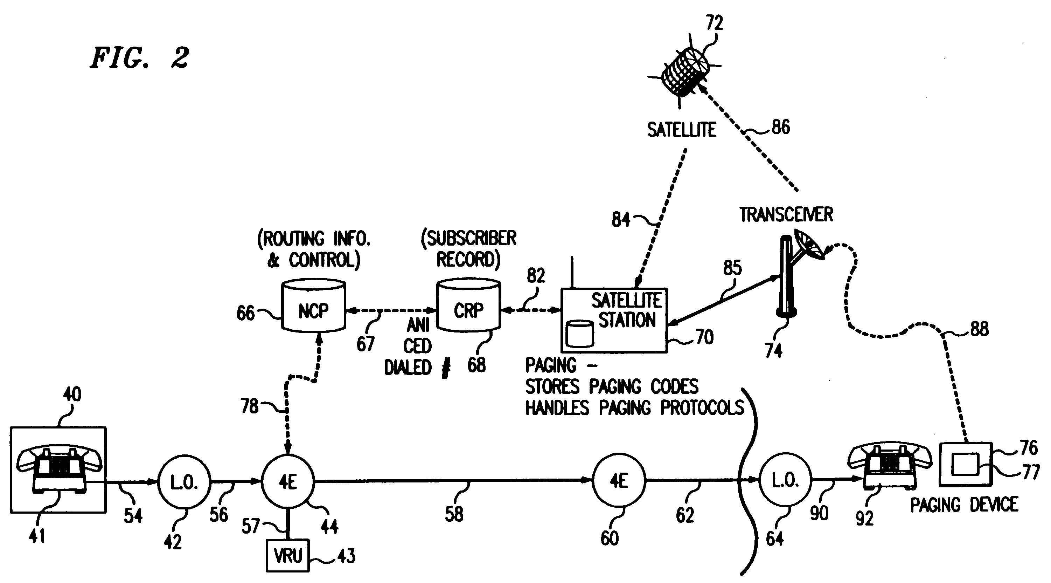

In a preferred embodiment, as shown in FIG. 2, the present invention is incorporated into an existing telephone network. As shown in the figure, a caller **40** seeks to establish communications with a mobile party, or "subscriber", **76** who is assigned a Personal Telephone Number (PTN) and is equipped with a two-way pager **77**. The caller initiates an incoming call from a telephone **41** by dialing the subscriber's PTN. This incoming call is coupled to a first local office **42** in the caller's locality through a first telephone line **54**. The first local office routes the call to an originating access switch **44** over a first trunk line **56**. Switch **44** may take the form of a digital switch, or an electronic switching system, such as an AT&T 4ESS™ switch ("4E" switch). For a more complete description of a 4E switch see, *The Bell System Technical Journal,* Vol. 56, No. 7, pp 1015-1320, pub. Sept. 1977.

Once the call has been routed to switch **44**, switch **44** queries a Network Control Point (NCP) **66** via a first Common Channel Interoffice Signaling (CCIS) link **78**. (CCIS combines the signaling information for a number of channels and transmits the information over a data link derived from a dedicated facility). At this point, if the subscriber has provisioned for the collection of Customer Entered Digits (CED) the NCP instructs switch **44** to couple the call to a Voice Response Unit (VRU) **43** via a first communication link **57**. The VRU (e.g. an AT&T Network Services Complex, or NSCX) then plays a standard prompting announcement to the caller and collects the CED (e.g. a Personal Identification Number, or PIN) via the reception of up to 10 Dual Tone Multi Frequency (DTMF) digits (i.e. Touch Tone™ signals from a Touch Tone™ telephone). In a system using a CED, provision must be made for the case where a caller can not enter digits because the caller is at a rotary dial station or does not respond to the prompt. In these two situations, the VRU may allow for a time-out or an abbreviated dialing sequence (e.g., #) to denote that no digits are forthcoming. Any CED collected by the VRU is passed back to the NCP.

After the collection of CED, or immediately after the originating access switch queries the NCP, whatever the case may be, the NCP queries a Customer Routing Point (CRP) **68** via a second CCIS link **67**. In the query, the NCP sends the CED, the PTN, and the caller telephone number (Automatic Number Identification number, or "ANI"). Based on the ANI and/or CED, the CRP screens the call, deciding whether or not the call is to be routed directly to the subscriber. If the call is not to be routed directly to the subscriber, the CRP instructs the NCP to route the call to an alternate treatment, such as a voice mailbox. If the call is to routed directly to the subscriber, the CRP accesses a subscriber record stored within the CRP, retrieves a forwarding number for the subscriber from the record, and returns the forwarding number to the NCP via CCIS link **67**. The NCP relays the forwarding number to the originating access switch via CCIS link **78** where the number is used to reroute the incoming call.

The subscriber may update the forwarding number at any time using the two-way pager. To update the forwarding number subscriber **76** generates an update signal containing the new forwarding number using two-way pager **77**. The update signal is transmitted to a paging service transceiver **74**. The transceiver relays the update signal to a satellite ground station **70**, either directly, via communication coupling **85**, or indirectly, via wireless link **86**, satellite **72**, and wireless link **84** via wireless link **86**. The satellite ground station, in turn, passes the signal to the CRP via a second communication link **82**. The CRP extracts the new forwarding number and uses it to update the subscriber's CRP record with the new forwarding number.

Calls are forwarded based on the most recent update of the forwarding number. As described above, whenever an incoming call passes screening by the CRP, NCP **66** retrieves the forwarding number from CRP **68** and passes it to originating access switch **44** for use in rerouting the call to a terminating telephone **92**. Rerouting from the originating access switch to the terminating telephone is achieved through: a second trunk line **58**, a terminating access switch **60** (which, like switch **44**, may be a digital switch or a 4E switch), a third trunk line **62**, a second local office **64**, and a second telephone line **90**. The originating access switch couples the call to the terminating access switch over the second trunk line. The terminating access switch, in turn, couples the call to the second local office over the third trunk line. The second local office then couples the call to the terminating telephone over the second telephone line. After rerouting is complete the call may be "picked up" by the subscriber at the terminating telephone.

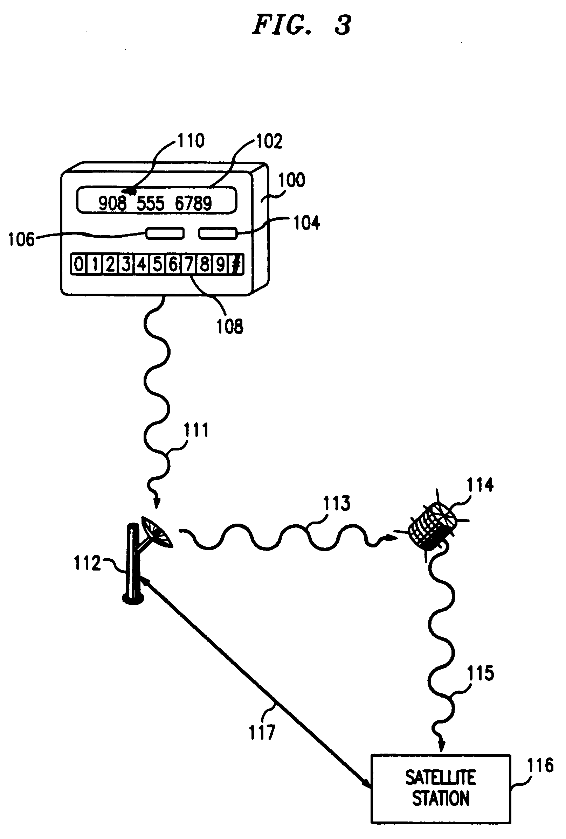

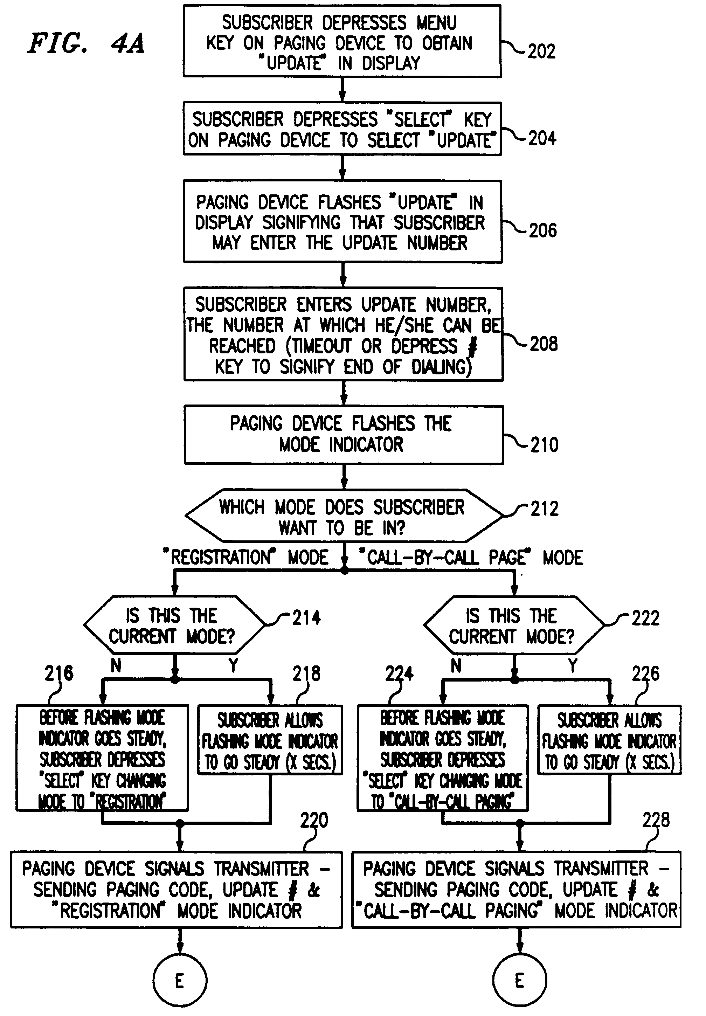

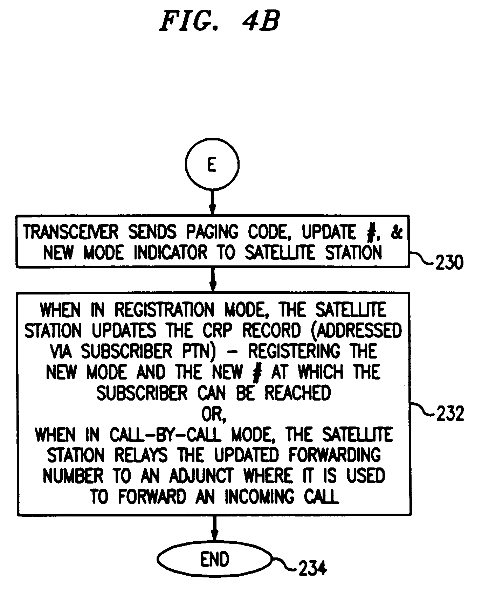

FIG. 3 shows an illustrative embodiment of a two-way pager **102**, a transceiver **112**, a satellite **114**, a satellite ground station **116**, wireless links **111**, **113** and **115**, and a communication link **117**, the embodiment being suitable for use in accordance with the present invention. The pager **100** includes: a display **102**, such as a liquid crystal display or light emitting diode display; a select key **104**; a menu key **106**; a keypad **108**; and a mode indicator **110**, that may be included within the display **102**. FIG. 3 will be referenced in the following discussion of the flowchart in FIGs 4A and 4B.

FIGS. 4A and 4B show the steps taken in updating the subscriber's forwarding number. The pager of FIG. 3 may be used to update the forwarding number on a "registration" basis, herein described, or on a "call by call" basis, as described in cross-referenced application Foladare 2-13-13-17. Thus, the description that follows includes provisions for both "registration" and "call by call" updating.

The first step the subscriber takes to update the forwarding number is to depress menu key **104** on pager **100** (step **202**). The word "update" will appear in display **102**. The subscriber then depresses select key **106** to select "update" (step **204**). The word "update" will flash in the display to indicate that the subscriber may enter the update number (step **206**). The subscriber may now input the forwarding number via keypad **108** followed by the # key to indicate the end of input (step **208**). To enter a special call handling instruction (as described in Foladare 2-13-13-17), such as a conference call instruction, a number associated with that instruction would be input rather than a forwarding number (step **208**) . A subscriber who does not want to change the forwarding number and does not want to input a special instruction number may simply depress the # key without keying in a number.

Moreover, in a preferred embodiment, the pager is equipped with the ability to store forwarding numbers so that abbreviated key sequences may be used to change the forwarding number. For example, the subscriber's office telephone number may be stored in the pager's memory at a first location and the subscriber's home telephone number may be stored in the pager's memory at a second location. Thereafter, when the subscriber wants to change the forwarding number to the office number, the subscriber simply keys in a 1 followed by the # sign. Similarly, when the subscriber wants to change the forwarding number to the home number, the subscriber simply keys in a 2 followed by the # sign.

In any case, after receiving a # input, the pager's mode indicator will flash (step **210**). At this point, the subscriber must select the desired mode (step **212**). The pager determines if the desired mode is the current mode (step **214** when desired mode is registration mode; step **222** when desired mode is call by call mode). If the subscriber desires the registration mode and the current mode is not the registration mode, then before the flashing mode indicator goes steady, the subscriber depresses select key **106** to change to registration mode (step **216**). If the subscriber desires the registration mode and the current mode is the registration mode, the subscriber allows a period of time to pass, after which the flashing mode indicator will go steady; or, in the alternative, the subscriber may depress the # key to curtail timing and retain the current mode (step **218**).

Similarly, if the subscriber desires the call by call mode and the current mode is not the call by call mode, then before the flashing mode indicator goes steady, the subscriber depresses select key **106** to change to call by call mode (step **224**). If the subscriber desires the call by call mode and the current mode is the call by call mode, the subscriber allows a period of time to pass, after which the flashing mode indicator will go steady; or, in the alternative, the subscriber may depress the # key to curtail timing and retain the current mode (step **226**). After the mode has been selected, the pager signals the transceiver **112** via wireless link **111**, sending the pager code, updated forwarding number, and a mode indicator (step **220** for registration mode; step **228** for call by call mode).

Following reception of the pager's transmission, the transceiver **112** relays the pager code, new forwarding number, and mode indicator to the satellite ground station **116** (step **230**), either directly, over communication coupling **117**, or indirectly, through satellite **114** and wireless links **113** and **115**. The next step (step **232**) depends on the selected mode. When the registration mode is selected, the satellite station determines the subscriber's PTN from the pager code, uses the PTN to retrieve the subscriber's Customer Routing Point (CRP) record, and, finally, updates the record to reflect the new mode and forwarding number. When the call by call mode is selected, the satellite station merely relays the updated forwarding number to an adjunct (described in Foladare 2-13-13-17) where it is used to forward an incoming call. The update is complete after step **232** (step **234**).

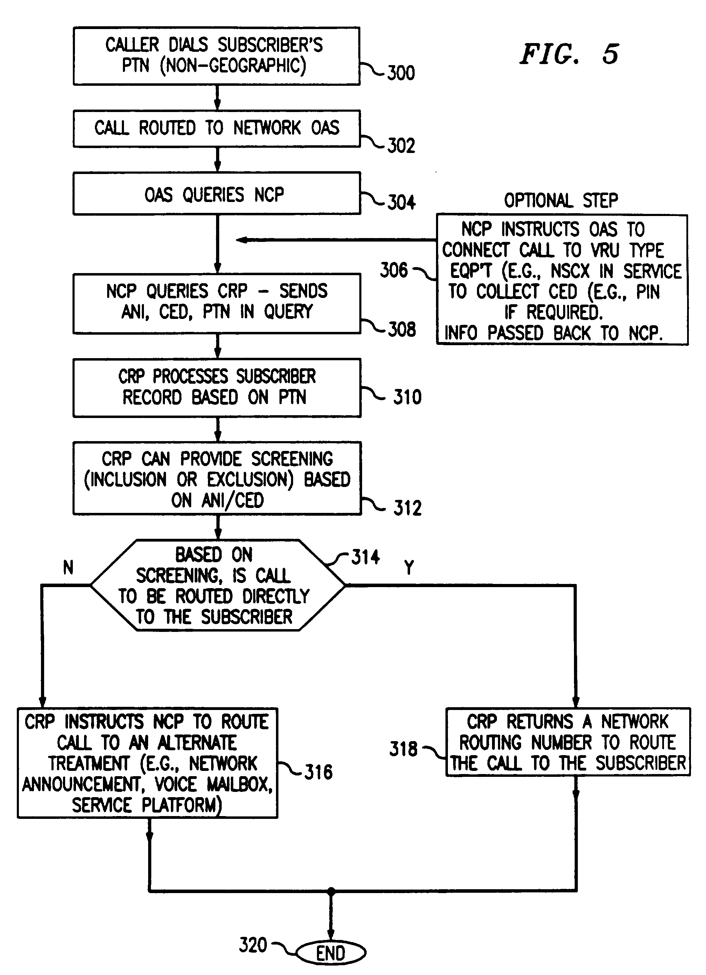

FIG. 5 shows, in flowchart form, the steps taken in completing a call in accordance with the present invention. In the following discussion of FIGs 5A and 5B references will be made to FIG 2.

As shown in FIG. 5, a caller initiates a call by dialing the subscriber's PTN (step **300**). The call is routed to the originating access switch (step **302**) which queries the NCP for routing information (step **304**). At this point, if the subscriber has provisioned for the collection of a CED, the NCP instructs the originating access switch to connect the call to the VRU for collection of DTMF digits, and to pass the collected digits back to the NCP (optional step **306**) . After collection of the CED digits, or immediately following step **304**, whatever the case may be, the NCP queries the CRP for the subscriber record, sending the CRP the CED, PTN, and ANI (step **308**). The CRP then retrieves the subscriber's record based on the PTN (step **310**). The record includes the forwarding number, and may include instructions to screen the incoming call. If the subscriber has provisioned the subscriber record to initiate call screening, the CRP screens the incoming call (determines the appropriate treatment for the call) based on the CED and/or ANI (step **312**).

Based on the screening performed in step **312**, a decision is made on whether or not to route the call directly to the subscriber (step **314**). If the call is not to be routed directly to the subscriber, the CRP instructs the NCP to route the call to an alternate treatment, such as a network announcement, voice mailbox, or service platform (step **316**). If the call is to be routed directly to the subscriber, the CRP returns the forwarding number, or "Network Routing Number" to the NCP which then uses the number to route the call to the terminating telephone where it can be "picked up" by the subscriber (step **318**). Following the rerouting of the call, the processing of the call is complete (step **320**).

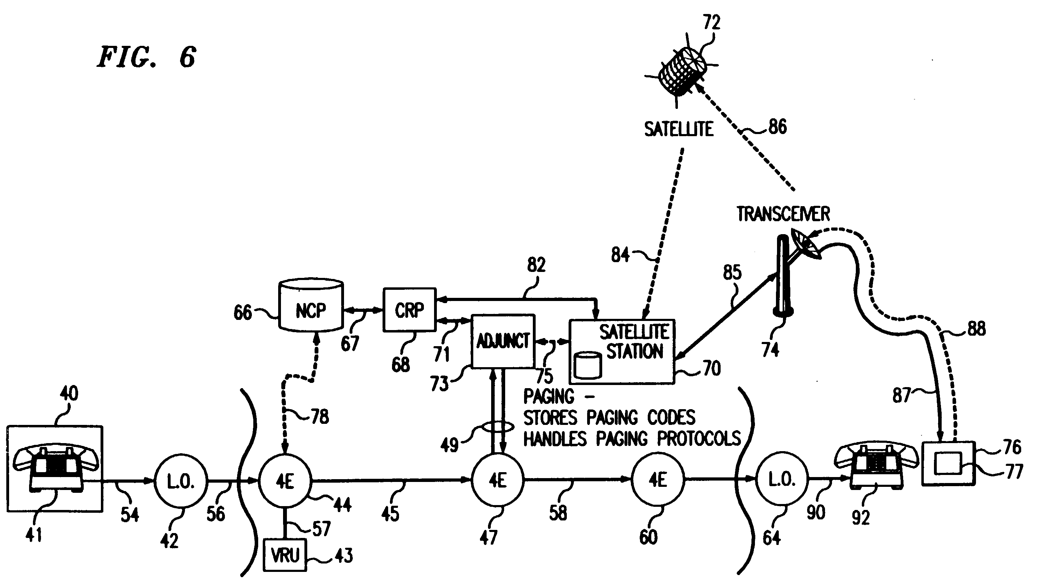

FIG. 6 is a block-schematic diagram of a further embodiment of a communication system in accordance with the present invention. FIG. 6 is identical to FIG. 2 with the exception of additional elements: adjunct **73**, switch **47**, communication couplings **45,49,71,75**, and wireless link **87**. The system of FIG. 6 may be used to offer subscriber's all of the features associated with both the registration mode of operation (described hereinabove), and the call by call mode of operation (described hereinbelow).

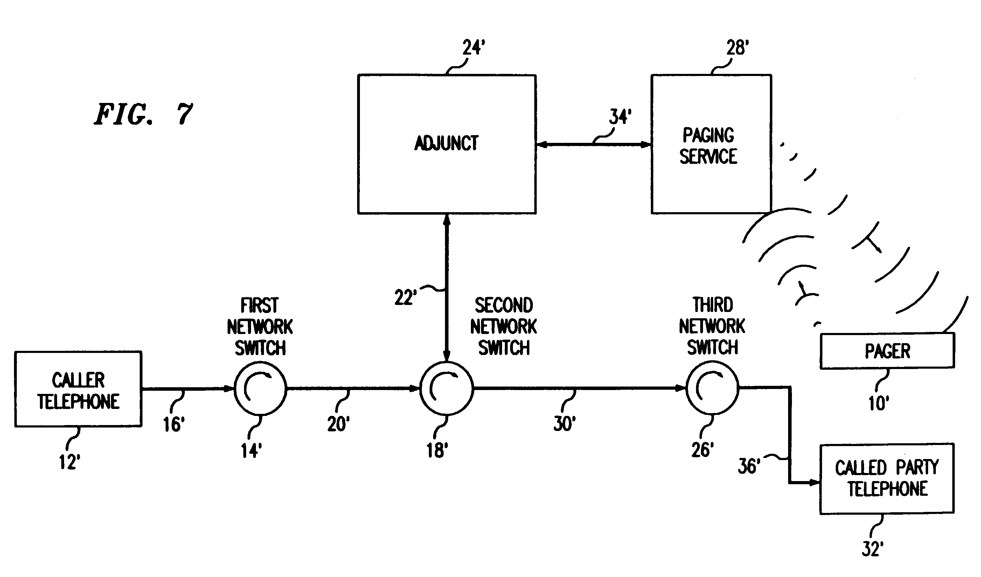

Referring to FIG. 7, there is shown a block diagram containing the major elements of a communication system that may be used to implement call by call mode forwarding. As shown in the figure, a caller initiates a call from a caller telephone **12'** to a mobile party who is equipped with a two-way pager **10'**. The caller telephone is coupled to a first network switch **14'** by a first communication coupling **16'**. The first network switch is, in turn, coupled to a second network switch **18'** by a second communication coupling **20'**. The second network switch is coupled to an adjunct **24'**, via third communication couplings **22'**, and to a third network switch **26'**, via fourth communication coupling **30'**. Thus, there is a path between the caller telephone and the adjunct, and a path between the caller telephone and the third network switch.

Adjunct **24'** is an intelligent component external to the network and connected to the network in the same way that a switch or telephone is connected. Examples of adjuncts include the AT&T Voice Response Units (VRUs), such as a Conversant, and the Summa Four. Two possible ways of connecting the adjunct to a network are: via a Common Channel Interoffice Signaling (CCIS) link, and via an Integrated Services Digital Network (ISDN) communication link. In an alternative embodiment, the adjunct is internal to the network, in which case the functioning of the adjunct remains the same but a connecting link is not required.

When a call is initiated by dialing the mobile party's PTN it is coupled to adjunct **24'** via couplings **16'**, **14'** and **22'**, and switches **14'** and **18'**. The adjunct puts the call on "hold" and, based on the mobile party's identity (known through the PTN), retrieves the information necessary to page the mobile party . This information may be contained in a database internal to the adjunct or it may be read from an external data base (not shown). Adjunct **24'** passes the necessary paging information to a paging service **28'** via a fifth communication coupling **34'**. The paging service then broadcasts a paging activation signal and a caller identification signal, both intended for reception by two-way pager **10'**.

Pager **10'** is equipped with: an alarm that is activated in response to the pager activation signal, a display that is responsive to the caller identification signal, and a keyboard for specifying a forwarding number or a special instruction. A mobile party who is alerted to a call may check the pager's display to identify the caller, and then, based on the identity of the caller, decide how to treat the call. One possible treatment is to forward the call to a called party telephone **32'**. The called party telephone may be a nearby telephone station or some remote telephone station, such as a secretary's station. To forward the call to the called party telephone the mobile party keys the telephone number of the called party telephone into the pager using the pager's keyboard, and then transmits the number to the paging service **28'**. The paging service passes the forwarding number to the adjunct where it is used to forward the call.

Other possible call treatments include those that may be used when the mobile party is busy. If the mobile party is busy with a call when a subsequent call to the party's PTN is placed, the party may forward the subsequent call to an alternate number, put the previous caller on hold and talk to the subsequent caller, or use the pager to transmit a conference call instruction to talk to both callers at the same time. Also, if the mobile party has forwarded the subsequent call but becomes free before the subsequent caller disconnects, the party may interrupt the forwarding of the subsequent call and redirect the call to the party.

In the configuration of FIG. 7, adjunct **24'** forwards the incoming call by holding the call at the adjunct while launching a second call from the adjunct to called party telephone **32'**. This second call is routed through: communication coupling **22'**, second network switch **18'**, communication coupling **30'**, third network switch **26'**, and sixth communication coupling **36'**. After the second call is complete the adjunct bridges the incoming call and the second call together so that the caller telephone is coupled to the called party telephone through the adjunct. As an alternative, the adjunct may merge the incoming call and the second call at the second network switch, in which case the adjunct drops from the call. Once the incoming call and the second call have been bridged, or merged, into a "forwarded call" the forwarded call may be "picked up" by the mobile party at telephone **32'**.

A similar procedure may be used to implement special call handling instructions. For instance, in the case of a conference call between two callers and the mobile party, the adjunct may bridge, or merge the two incoming calls from the callers to an outgoing call to the mobile party.

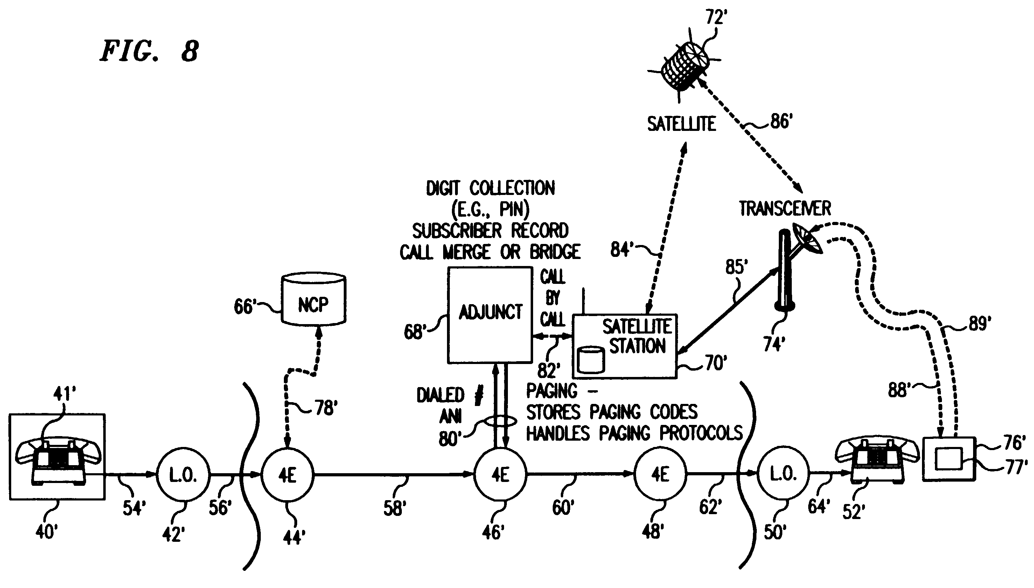

FIG. 8, shows how call by call forwarding may be implemented in an existing telephone network. As shown, a caller **40'** seeks to establish communications with a mobile party, or "subscriber", **76'** who is equipped with a two-way pager **77'**. The subscriber is assigned a Personal Telephone Number (PTN). The caller initiates an incoming call from a telephone **41'** by dialing the mobile party's PTN. This incoming call is coupled to a local office **42'** in the caller's locality through a telephone line **54'**. The local office **42'** routes the call to an originating access switch **44'** over a trunk line **56'**. Switch **44'** may take the form of a digital switch, or an electronic switching system, such as an AT&T "4E" switch.

Once the call has been routed to switch **44'**, a Network Control Point (NCP) **66'** receives the call's signaling information, including the dialed PTN, over a CCIS link **78'**. The NCP uses the dialed number to retrieve routing information from the NCP's associated database. The NCP then routes the call over a trunk line **58'** to a terminating access switch **46'**, which, like the originating access switch, may be a digital switch or a 4E switch. Switch **46'** is connectable to an adjunct **68'** via an ISDN link **80'**. The terminating access switch is capable of merging calls in response to a signal from the adjunct.

The ISDN link provides adjunct **68'** with both the called number (subscriber's PTN) and the calling number (Automatic Number Identification number, or "ANI"). The adjunct retrieves the subscriber's record and current status information based on the PTN. From the subscriber's record the adjunct also determines whether or not the subscriber is provisioned to receive a Personal Identification Number (PIN). If the subscriber is so provisioned, adjunct **68'** plays a standard prompting announcement to the caller after which the PIN is collected from the caller by the reception of up to 10 Dual Tone Multi Frequency (DTMF) digits (i.e. Touch Tone™ signals from a Touch Tone telephone). In a system using PINs, provision must be made for the case where a caller can not enter a PIN because the caller is at a rotary dial station and for the case where a caller does not respond to the prompt. In these two cases, adjunct **68'** may allow for a time-out or an abbreviated dialing sequence (e.g., #) to denote that no PIN is forthcoming. Regardless of whether or not a PIN is collected, adjunct **68'** proceeds to determine if the subscriber **76'** is busy with another call to the subscriber's PTN. It stores this determination, and then continues processing the call.

At this point, the adjunct plays an announcement that the system will "search" for subscriber **76'**. On a subscriber pre-provisioned basis, adjunct **68'** may play an announcement to the caller **40'** as an inducement to remain on the line while awaiting call completion. Meanwhile, the adjunct retrieves the subscriber's pager code (known from the PTN) and transmits the code along with the caller's ANI (or PIN, if so provisioned) to a satellite station **70'** via a communication link **82'**.

The satellite station broadcasts the pager code and ANI (or PIN) to a paging transceiver **74'** either through a satellite **72'** or through a communication coupling **85'**. When the satellite is used, the pager code and ANI (or PIN) are transmitted to the satellite by way of a wireless link **84'**. The satellite, in turn, broadcasts the pager code and ANI (or PIN) to the transceiver by way of a wireless link **86'**.

Communication coupling **85'** is used when the two-way pager is equipped for location registration. Under the location registration scheme, the two-way pager periodically sends out a signal from which the satellite station determines the region within which the mobile party is located. Once the satellite station knows the mobile party's region, it need only send the paging information to the transceiver associated with that region. In this manner, the need for a national broadcast to all transceivers via satellite is obviated. Thus, when location registration is used satellite station **70'** may transmit the pager code and ANI (or PIN) to transceiver **74'** via communication coupling **85'**. It will be understood by those of ordinary skill in the art that separate communication couplings from the satellite station to each transceiver are not required. Rather, signals to a transceiver that is not directly linked to the satellite station may be relayed to that transceiver over a transceiver network linked to the satellite station.

Regardless of whether satellite **72'** or communication coupling **85'** is used, the transceiver **74'** broadcasts a paging signal that includes the pager code and ANI (or PIN) to the subscriber's pager. Broadcasting from transceiver **74'** to pager **77'** is represented by a wireless link **88'**. Upon receipt of the paging signal from the transceiver, the subscriber is alerted to the call and responds by sending a forwarding signal. The subscriber may include any one of a number of possible responses in the forwarding signal.

The subscriber may elect to forward the call to a telephone station of the subscriber's choice, in which case, the subscriber uses the two-way pager to transmit the number of the desired telephone station to the transceiver. Alternatively, the subscriber may forward the call to voice mail, or some other treatment, in which case the subscriber uses the pager to transmit a number associated with the desired treatment.

The independence of the paging and communication paths makes it possible for the subscriber to forward calls to the subscriber's PTN even when the subscriber is busy with an earlier call. This will be true regardless of whether the earlier call was directed to the subscriber's PTN or directly to the telephone station at which the subscriber "picked up" the earlier call. Thus, in an illustrative scenario, the subscriber forwards a first caller to a nearby telephone station and picks up the call at that station. Then, while talking to the first caller, the subscriber forwards a second caller to a secretary, forwards a third caller to voice mail, and so on. The subsequent calls may be the forwarded without interruption of the first call and without the first caller becoming aware of them.

In addition to transmitting call forwarding instructions, the subscriber may transmit special call handling instructions, such as putting a caller on hold, switching between callers, creating a conference call, and redirecting a previously forwarded call. In a one possible embodiment, these special instructions are implemented by assigning them a number which the subscriber sends to the transceiver in the same way that a forwarding number is sent. Thus, in an example of switching between callers, a busy subscriber who receives a second call may send the number 999 to the transceiver indicating that the first caller should be put on hold and the second caller forwarded to the subscriber's present telephone station. In an example of redirecting a previously forwarded call, a busy subscriber who has forwarded a subsequent call to voice mail but later becomes free to take the subsequent call, may interrupt the forwarding of the subsequent call by sending the number 000 to the transceiver before the forwarded caller disconnects, the 000 indicating that the forwarded call should be released from voice mail and forwarded to the subscriber. Regardless of the call handling treatment chosen by the subscriber, the two-way pager transmits the forwarding signal to transceiver **74'**, as represented by wireless link **89'**. The transceiver relays the two-way pager's transmissions to satellite station **72'**, either through satellite **72'** via wireless links **86'** and **84'**, or through communication link **85'**. The satellite station then relays the subscriber's instructions to the adjunct via communication link **82'**, and the adjunct responds accordingly.

To forward the call to a called party telephone **52'**, the adjunct initiates a second call. The second call is routed to a third access switch **48'** via a trunk line **60'** (like switches **44'** and **46'**, switch **48'** may be a digital switch or a 4E switch). The third access switch then routes the second call to a local end office **50'** based on the forwarding number provided by the subscriber, the forwarding number being the number of called party telephone **52'**, to which the original call will be forwarded. The local end office couples the second call to the called party telephone via a telephone line **64'**.

Upon completion of the second call, the call from the caller to the PTN (on hold at the adjunct) and the second call are either bridged together within adjunct **68'** (in which case the adjunct remains with the call), or merged at switch **46'** (in which case the adjunct drops from the call). If the calls are bridged, the adjunct may implement the features of putting a caller on hold, switching between callers, creating a conference call, and interrupting a previously forwarded call. Whereas, if the calls are merged, switch **46'** may implement these features under direction from the adjunct.

During the interval of time between the dialing of the subscriber's PTN to initiate a call and the final disposition of that call (the call set up time), an announcement may be played to the caller as an inducement to stay on the line while the call is processed.

FIGs 3, 4A and 4B will be referenced in the following discussion of the procedure for updating the forwarding number in accordance with the call by call mode.

The first step the subscriber takes to update the forwarding number is to depress menu key **104** on pager **100** (step **202**). The word "update" will appear in display **102**. The subscriber then depresses select key **106** to select "update" (step **204**). The word "update" will flash in the display to indicate that the subscriber may enter the update number (step **206**). The subscriber may now input the forwarding number via keypad **108** followed by the # key to indicate the end of input (step **208**). To enter a special call handling instruction, such as a conference call instruction, a number associated with that instruction would be input rather than a forwarding number (step **208**). A subscriber who does not want to change the forwarding number and does not want to input a special instruction number may simply depress the # key without keying in a number.

Moreover, in one possible embodiment, the pager is equipped with the ability to store forwarding numbers so that abbreviated key sequences may be used to change the forwarding number. For example, the subscriber's office telephone number may be stored in the pager's memory at a first location and the subscriber's home telephone number may be stored in the pager's memory at a second location. Thereafter, when the subscriber wants to change the forwarding number to the office number, the subscriber simply keys in a 1 followed by the # sign. Similarly, when the subscriber wants to change the forwarding number to the home number, the subscriber simply keys in a 2 followed by the # sign.

In any case, after receiving a # input, the pager's mode indicator will flash (step **210**). At this point, the subscriber must select the desired mode (step **212**) (To implement call by call forwarding the subscriber would select call by call mode). The pager determines if the desired mode is the current mode (step **214/222**). If the subscriber desires the call by call mode and the current mode is not the call by call mode, then before the flashing mode indicator goes steady, the subscriber depresses select key **106** to change to call by call mode (step **224**) . If the current mode is the call by call mode, the subscriber allows a period of time to pass, after which the flashing mode indicator will go steady; or, in the alternative, the subscriber may depress the # key to curtail timing and retain the current mode (step **226**). After the mode has been selected, the pager signals the transceiver **112**, sending the pager code, updated forwarding number, and a call by call mode indicator (step **228**).

Following reception of the pager's transmission, represented by wireless link **111**, transceiver **112** relays the pager code, updated forwarding number, and mode indicator to satellite station **116** either through wireless link **113**, satellite **114**, and wireless link **115**; or, when location registration is used, through communication link **117** (step **230**). Finally, the satellite station relays the forwarding number to the adjunct where it is used to forward an incoming call (step **232**). At this point the update is complete (step **234**).

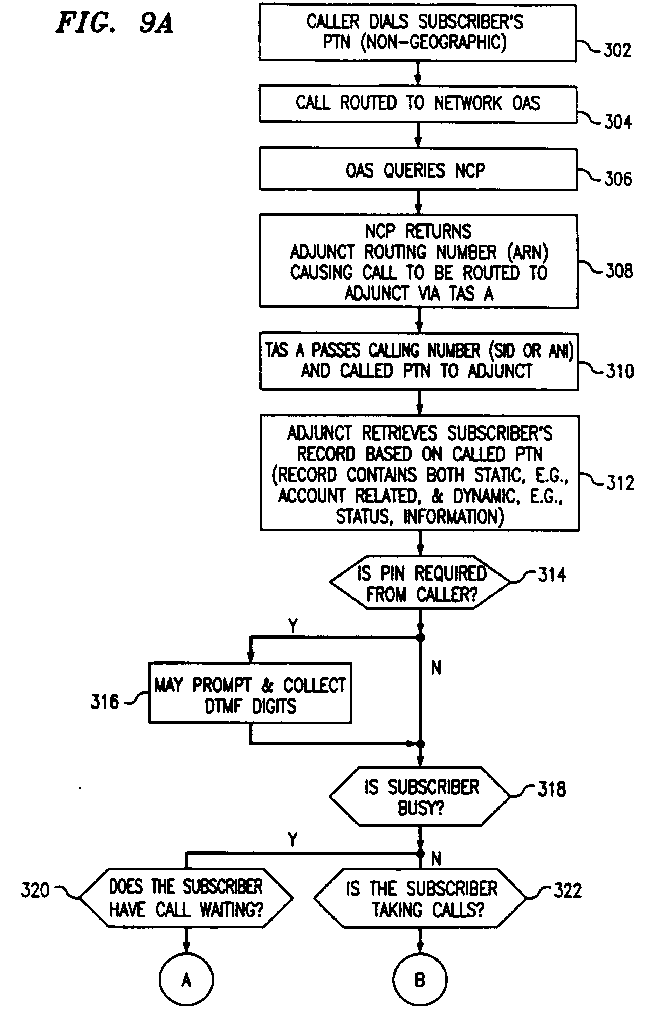

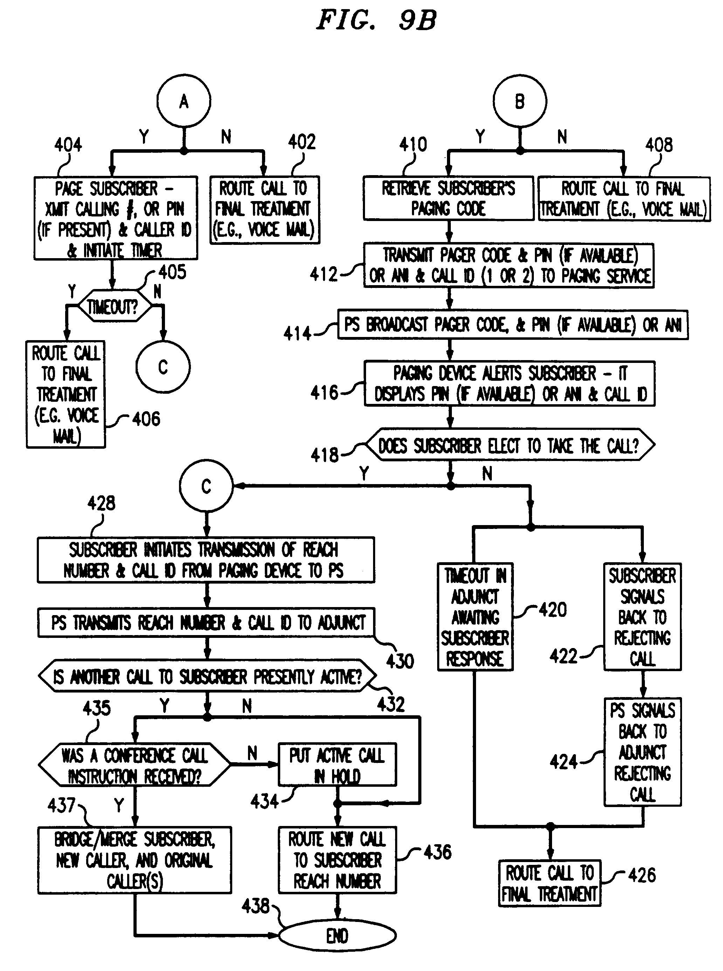

FIGS. 9A and 9B show, in flowchart form, the steps taken in forwarding calls on a call by call basis. In the following discussion of FIGs 9A and 9B references will be made to FIG 8.

The call by call procedure is invoked when caller **40'** dials the subscriber's PTN (step **302**). The call is routed to originating access switch **44'**, or "OAS", (step **304**) and the OAS queries NCP **66'** (step **306**). The NCP returns an Adjunct Routing Number (ARN) to the OAS, causing the call to be routed to adjunct **68'** via terminating access switch **46'**, or "TAS A", (step **308**). The terminating access switch passes the calling number, determined through ANI, and the called PTN to the adjunct (step **310**). The adjunct then retrieves the subscriber's record based on the dialed PTN (step **312**) and determines if the subscriber has provisioned for a PIN to be collected from the caller (step **314**).

If a PIN has been provisioned for, adjunct **68'** plays a prompt and collects DTMF digits (step **316**). If a PIN has not been provisioned for, the procedure skips to step **318** which is to determine if the subscriber is busy (i.e., if a call to the subscriber via the adjunct is in progress).

If the subscriber is busy, the next step is to check if the subscriber has Call Waiting (step **320**). If the subscriber does not have Call Waiting, the call is routed to final treatment, such as Voice Mail (step **402**). If the subscriber does have Call Waiting, the subscriber is paged, the paging signal including the pager code, calling number (or PIN), and a call identifier (step **404**) . If the subscriber does not respond to the page within some predetermined time after the page is sent (step **405**), the caller is "timed out" and the call is routed to final treatment (step **406**). The subscriber may respond within the allotted time by initiating transmission of a forwarding (or "reach") number, or a conference call instruction (step **428**), and processing of the call continues in accordance with the steps following step **428**.

If it is determined in step **318** that the subscriber is not busy, adjunct **68'** determines whether or not the subscriber is taking calls (step **322**). If calls are not being accepted, the call is forwarded to final treatment (step **408**) . Otherwise, the adjunct retrieves the subscriber's pager code (step **410**) and transmits the pager code, calling number (or PIN), and call identifier to the paging service (step **412**). The paging service then broadcasts the information (step **414**) to pager **77'** which alerts the subscriber and displays the calling number (or PIN) and the call identifier (step **416**). At this point, the subscriber may accept or reject the call (step **418**).

There are two ways by which the subscriber may reject the call. The subscriber may do nothing, in which case the caller will be timed out (step **420**) and the adjunct will route the call to final treatment (step **426**). Or, the subscriber may send a rejection signal (a special instruction) to the paging service (step **422**), in which case the paging service will relay the rejection signal to the adjunct (step **424**) and the adjunct will cause the call to be routed to final treatment (step **426**). If the subscriber elects to take the call, the subscriber initiates transmission of a reach number by way of two-way pager **77'** (step **428**).

Thus, the subscriber may transmit either a reach number or a conference call instruction at step **428** of the process. Upon receipt of a number, the paging service transmits the number and the call identification to the adjunct (step **430**). Next, the adjunct checks whether or not there is another presently active call to the subscriber (step **432**).

In the event there is a presently active call, the adjunct checks to see if a conference call instruction was received (step **435**). If a conference call instruction was not received, the adjunct puts the active call on hold (step **434**) and bridges/merges the new call to the subscriber (step **436**). If a conference call instruction was received, the adjunct bridges/merges the new call to both the subscriber and the original caller (step **437**).

In the event there is not another presently active call, step **434** is skipped and the adjunct bridges/merges (step **436**) the new call to the subscriber immediately following step **432**. The procedure is complete upon bridging/merging of the call (step **438**).

Referring back to FIG. 6, adjunct **73**, switch **47**, communication couplings **45,49,75**, and wireless link **87** function in the same manner as their counterpart elements in FIG. 8 (viz. adjunct **68'**, switch **46'**, communication couplings **48', 80', 82'**, and wireless link **88'**). When the call reaches switch **44**, switch **44** queries NCP 66 which, in turn, queries CRP **68** for instructions. If the subscriber has only subscribed to registration type service the call may be handled according to the procedures set forth in connection with FIG. 5. However, if the subscriber has subscribed to features available only through call by call type service, such as the conference call feature, the CRP directs switch **44** to route the call to adjunct **73**. Once the call has been redirected to the adjunct, the adjunct may handle the call according to the procedures set forth in connection with FIGs 9A and 9B. Thus, both registration and call by call type service may be offered through the configuration of FIG. 6.

As an added feature of the preferred embodiment of FIG. 6, adjunct **73** is coupled to CRP **68** via communication coupling **71**. Accordingly, when the CRP directs a call to the adjunct, the adjunct can query the CRP for the subscriber's record and current status information. In this manner the CRP may act as the database from which the adjunct retrieves the paging information necessary to implement call by call forwarding.

## Claims

1. A communication system comprising:
a) a caller communication device for initiating a call to a called party using a personal telephone number that is uniquely associated with said called party;
b) a called party communication device to which said call is forwarded, said called party communication device being associated with a forwarding number;
c) a pager for use by said called party in transmitting an update signal, said update signal including said forwarding number;
d) a customer routing point for receiving said update signal, extracting said forwarding number, and storing said forwarding number;
e) a network control point for retrieving said forwarding number from said customer routing point based on said personal telephone number and for using said forwarding number to reroute said call to said called party communication device;
f) means for coupling said caller communication device to said network control point;
g) means for coupling said network control point to said customer routing point; and
h) means for coupling said caller communication device to said called party communication device.

2. A communication system according to claim 1, further comprising:
a voice response unit for playing a prompting announcement to said caller communication device, collecting one or more customer entered digits from said caller communication device, and passing said customer entered digits to said network control point; and
means for coupling said voice response unit to said caller communication device.

3. A communication system according to claim 2, wherein said means for coupling said caller communication device to said network control point comprises;
an originating access switch;
a first communication link coupling said caller communication device to said originating access switch; and
a second communication link coupling said originating access switch to said network control point.

4. A communication system according to claim 3, wherein:
said originating access switch is a digital switch;
said first communication link comprises a telephone line, a first local office, and a second telephone line; and
said second communication link is a common channel interoffice signaling link.

5. A communication system according to claim 4, wherein said means for coupling said caller communication device to said called party communication device comprises:
said first communication link;
said originating access switch;
a terminating access switch;
a third communication link coupling said originating access switch to said terminating access switch;
a second local office;
a third telephone line coupling said terminating access switch to said second local office; and
a fourth telephone line coupling said second local office to said called party communication device.

6. A communication system according to claim 5, wherein;
said third access switch is a digital switch; and
said third communication link is a telephone trunk line.

7. A communication system according to claim 1, further comprising:
a paging service for receiving said update signal from said pager and for relaying said update signal to said customer routing point; and
means for coupling said paging service to said customer routing point.

8. A communication system according to claim 7, wherein said paging service comprises:
a transceiver for receiving said update signal from said pager and for transmitting said update signal;
a satellite for receiving said update signal from said transceiver and for broadcasting said update signal; and
a satellite station for receiving said update signal from said satellite and for relaying said update signal to said customer routing point.

9. A communication system according to claim 1, wherein said pager comprises:
means for transmitting an update signal;
a keypad for changing the characteristics of said update signal; and
a display for displaying information about said update signal.

10. A method of establishing communications over a network, comprising the steps of:
a) transmitting a forwarding number from a pager to a customer routing point within a communications network;
b) storing said forwarding number in said customer routing point;
c) initiating a call from a caller communication device by dialing a called party's personal telephone number;
d) coupling said call to a network control point;
e) retrieving said forwarding number from said customer routing point based on said personal telephone number; and
f) routing said call to a called party communication device associated with said forwarding number.

11. A method of establishing communications over a network according to claim 10, wherein said step of coupling said call to a network control point comprises the steps of:
providing an originating access switch;
coupling said caller communication device to said originating access switch; and
coupling said originating access switch to said network control point.

12. A method of establishing communications over a network according to claim 11, wherein said step of retrieving said forwarding number comprises the steps of:
providing a communication link between said customer routing point and said network control point; and
passing said forwarding number from said customer routing point to said network control point via said communication link.

13. A method of establishing communications over a network according to claim 12, wherein said step of coupling said caller communication device to said originating access switch comprises the steps of:
providing a first telephone line, a first local office, and a second telephone line;
coupling said caller communication device to said first local office via said first telephone line; and
coupling said first local office to said originating access switch via said second telephone line.

14. A method for establishing communications over a network according to claim 13, wherein said step of rerouting said call comprises the steps of:
providing terminating access switch;
coupling said call from said originating access switch to terminating access switch; and
coupling said call from said terminating access switch to said called party communication device.

15. A method for establishing communications over a network according to claim 14, wherein said step of coupling said call from said terminating access switch to said called party communication device comprises the steps of:
providing a third phone line, a second local office, and a fourth phone line;
coupling said terminating access switch to said second local office via said third phone line; and
coupling said second local office to said called party communication device via said fourth phone line.

16. A method of establishing communications over a network according to claim 10, wherein said step of coupling said call to a network control point further comprises the steps of:
coupling said call to a voice response unit;
collecting one or more customer entered digits at said voice response unit; and
passing said computer entered digits to said network control point for use in processing said call.

17. A method of establishing communications over a network according to claim 16, wherein said step of routing said call to a caller communication device comprises the steps of:
screening said call based on said customer entered digits to determine whether said call should be routed to a called party communication device associated with said forwarding number or routed to an alternative treatment; and
routing said call base on the result of said screening.

18. A method of establishing communications over a network according to claim 16, wherein said step of routing said call to a called party communication device comprises the steps of:
determining a caller communication device identification number;
screening said call based on said caller communication device identification number to determine whether said call should be routed to a called party communication device associated with said forwarding number or routed to an alternative treatment; and
routing said call base on the result of said screening.

19. A method of establishing communications over a network according to claim 10, wherein said step of transmitting a forwarding number from a pager to a customer routing point comprises the steps of:
transmitting an update signal including a forwarding number from said two-way pager to a paging service transceiver;
transmitting said update signal from said transceiver to a paging service satellite;
broadcasting said forwarding signal from said satellite for reception by a paging service satellite station; and
transmitting said forwarding signal from said satellite station to a customer routing point.

20. A communication system comprising:
a) a caller communication device for initiating a call to a called party using a personal telephone number that is uniquely associated with said called party;
b) a called party communication device to which said call is forwarded, said called party communication device being associated with a forwarding number;
c) a pager for use by said called party in transmitting an update signal, said update signal including said forwarding number;
d) a customer routing point for receiving said update signal, extracting said forwarding number, and storing said forwarding number; and
e) an adjunct for receiving said call from said caller communication device, retrieving said forwarding number from said customer routing point, and forwarding said call to said called party communication device.
